# DEMANDE DE BREVET EUROPEEN

(11) **EP 0 866 354 A1**
(43) Date de publication de la demande: **23.09.1998**
(21) Numéro de dépôt: 98400558.7
(22) Date de dépôt: 10.03.1998
(51) Int. Cl.: G02C 7/04

(54) **Lentille de contact à bossages palpébraux**

(30) Priorité: 17.03.1997 FR 9703176
(71) Demandeur: ESSILOR INTERNATIONAL (Compagnie Générale d'Optique), F-94220 Charenton-le-Pont (FR)
(72) Inventeur: Baude, Dominique, 93400 Saint Ouen (FR); Chateau, Nicolas, 75013 Paris (FR); Bouchard, Florence, 05350 Chateau-Ville-Vielle (FR); Bernardet, Didier, 77600 Bussy Saint Georges (FR)
(74) Mandataire: CABINET BONNET-THIRION

(57) **Abrégé**

II s'agit d'une lentille de contact du genre comportant, localement, en saillie sur sa surface externe (11), dans sa zone périphérique (13), pour sa stabilisation dynamique, au moins un bossage palpébral (12).

Suivant l'invention, ce bossage palpébral (12) est globalement allongé circonférentiellement, et, à l'une et l'autre de ses extrémités circonférentielles (15, 16), la pente de sa ligne de crête (L) est comprise entre 0,020 et 0,140, et, préférentiellement, entre 0,040 et 0,080.

Application, notamment, aux lentilles de contact à correction optique axée et aux lentilles de contact pour presbytes.

## Description

La présente invention concerne d'une manière générale les lentilles de contact qui, pour leur stabilisation dynamique, comportent, localement, en saillie, sur leur surface externe, dans leur zone périphérique, c'est-à-dire à distance de leur zone centrale active, au moins un bossage palpébral.

Par bossage palpébral, on entend, ici, de manière usuelle, un bossage soumis à l'action des paupières à chaque battement de celles-ci.

La stabilisation dynamique recherchée résulte précisément de cette action.

La présente invention vise plus particulièrement, mais non nécessairement exclusivement, les lentilles de contact à correction optique axée, telles que, par exemple, les lentilles de contact toriques, ainsi que les lentilles de contact pour presbytes.

Une lentille de contact à correction optique axée et comportant des bossages palpébraux fait l'objet du brevet européen No 0 042 023.

Mais, indépendamment de leur épaisseur, ou hauteur, il n'est donné aucune indication géométrique sur ces bossages palpébraux dans ce brevet européen.

Or il s'avère, à l'expérience, que, de cette géométrie dépend aussi bien l'efficacité des bossages palpébraux en cause quant à la stabilisation dynamique recherchée que le confort du porteur d'une lentille de contact comportant de tels bossages palpébraux.

La présente invention a d'une manière générale pour objet de préciser cette géométrie, pour une optimisation de celle-ci.

De manière plus précise, elle a pour objet une lentille de contact du genre comportant, localement, en saillie sur sa surface externe, dans sa zone périphérique, pour sa stabilisation dynamique, au moins un bossage palpébral, et caractérisée d'une manière générale en ce que ce bossage palpébral est globalement allongé circonférentiellement, et en ce que, à l'une et l'autre de ses extrémités circonférentielles, la pente de sa ligne de crête est comprise entre 0,020 et 0,140, et, préférentiellement, entre 0,040 et 0,080.

Il s'avère, en effet, de manière assez surprenante et sans d'ailleurs qu'aucune explication pratique puisse en être donnée, que, avec de telles valeurs de pente pour la ligne de crête des bossages palpébraux aux extrémités circonférentielles de ceux-ci, et les autres conditions étant égales par ailleurs, un bon compromis peut être trouvé entre, d'une part, la stabilisation dynamique recherchée, et, d'autre part, le confort du porteur.

Selon une première forme de réalisation envisageable, la ligne de crête d'un bossage palpébral suivant l'invention comporte, dans sa zone médiane, un méplat.

Dans un tel cas, la hauteur maximale de ce bossage palpébral, mesurée en pratique au niveau du méplat de sa ligne de crête, est, pour un bon confort du porteur, au plus égale à 0,2 mm.

En variante, suivant une deuxième forme de réalisation envisageable, la ligne de crête d'un bossage palpébral suivant l'invention comporte, dans sa zone médiane, un sommet.

Préférentiellement, dans ce cas, pour une bonne stabilisation dynamique, la hauteur maximale de ce bossage palpébral, mesurée en pratique au niveau du sommet de sa ligne de crête, est au moins égale 0,2 mm, en pouvant aller par exemple jusqu'à 0,25 mm sans que le confort du porteur soit compromis.

Dans tous les cas, la ligne de crête d'un bossage palpébral suivant l'invention s'étend préférentiellement suivant un arc de cercle, ce bossage palpébral étant lui-même préférentiellement globalement cintré en arc de cercle.

L'objet de l'invention, et ses caractéristiques et avantages, ressortiront mieux de la description qui va suivre, à titre d'exemple, en référence aux dessins schématiques annexés sur lesquels :
la figure 1 est une vue en élévation d'une lentille de contact comportant deux bossages palpébraux suivant l'invention ;
la figure 2 en est une vue en coupe diamétrale, suivant la ligne ll-ll de la figure 1 ;
la figure 3 reprend, à échelle supérieure, le détail de la figure 1, qui, relatif à l'un de ces bossages palpébraux, est repéré par un encart III sur cette figure 1;
la figure 4 est, à l'échelle de la figure 3, une vue partielle en coupe transversale du bossage palpébral concerné, suivant la ligne IV-IV de la figure 3 ;
la figure 5 est, à la même échelle, et supposée développée à plat, une vue en coupe circonférentielle de ce bossage palpébral passant par sa ligne de crête, suivant la ligne V-V de la figure 3 ;
les figures 6, 7, 8 sont des vues qui, analogues chacune respectivement à celles des figures 3, 4 et 5, se rapportent à une variante de réalisation.

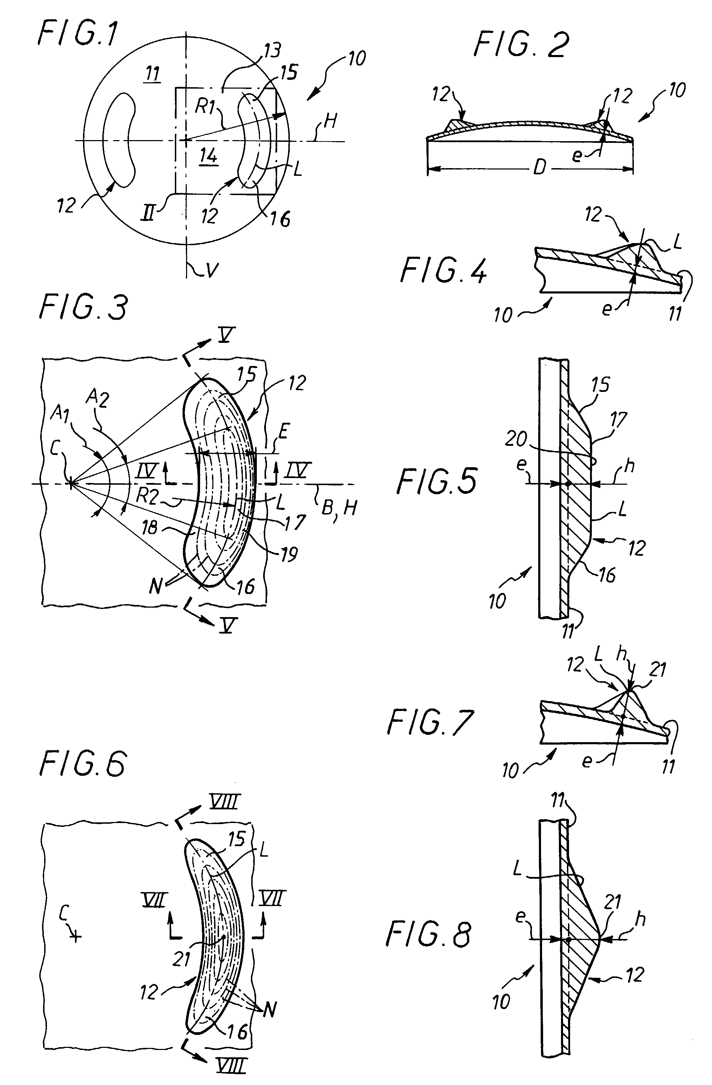

Tel qu'il est visible sur la figure 1, et de manière connue en soi, la lentille de contact 10 suivant l'invention se présente sous la forme générale d'un palet plus ou moins bombé et de contour périphérique circulaire.

Soit R1 son rayon, c'est-à-dire le demi-diamètre de son contour périphérique.

De manière également connue en soi, la lentille de contact 10 suivant l'invention comporte, localement, en saillie sur sa surface externe 11, c'est-à-dire sur sa surface avant, pour sa stabilisation dynamique, au moins un bossage palpébral 12.

Préférentiellement, et tel que représenté, elle comporte, plus précisément, deux bossages palpébraux 12, disposés, chacun respectivement, de manière symétrique, de part et d'autre de son plan diamétral vertical V.

Ces bossages palpébraux 12 interviennent, globalement, dans la zone périphérique 13 de la lentille de contact 10, à distance de sa zone centrale utile 14.

Pour que la configuration de ces bossages palpébraux 12 soit plus apparente, ils ont été affectés de courbes de niveau N, en traits interrompus, sur les figures 3 et 6.

Dans les formes de réalisation représentées, les bossages palpébraux 12 ont l'un et l'autre des configurations identiques.

Seul, donc, l'un d'eux, sera décrit dans ce qui suit.

Suivant l'invention, ce bossage palpébral 12 est globalement allongé circonférentiellement, suivant un secteur circulaire, et, à l'une et l'autre de ses extrémités circonférentielles 15, 16, l'une supérieure, l'autre inférieure, la pente P de sa ligne de crête L est comprise entre 0,020 et 0,140, et, préférentiellement, entre 0,040 et 0,080.

Pour plus de clarté, la ligne de crête L a été matérialisée en traits interrompus sur les figures 3 et 6.

S'étendant dans le plan des figures 5 et 8, elle ressort en outre en traits continus sur ces figures 5 et 8.

Dans les formes de réalisation représentées, la ligne de crête L d'un bossage palpébral 12 suivant l'invention s'étend suivant un arc de cercle.

Le rayon R2 de cet arc de cercle est préférentiellement compris entre 0,7 fois et 0,9 fois le rayon R1 de la lentille de contact 10, tel que défini ci-dessus.

Par exemple, lorsque cette lentille de contact 10 a un diamètre extérieur compris entre 14 mm et 15 mm, le rayon de l'arc de cercle suivant lequel s'étend la ligne de crête L d'un bossage palpébral 12 suivant l'invention est compris entre 4,9 mm et 6,8 mm.

Dans les formes de réalisation représentées, le bossage palpébral 12 suivant l'invention est lui-même globalement cintré en arc de cercle, à la manière d'une banane.

Dans les formes de réalisation représentées, l'angle au centre A1 sous-tendu par l'ensemble de ce bossage palpébral 12 est compris entre 60° et 150°.

Par exemple, cet angle au centre A1 est voisin de 70°.

Dans les formes de réalisation représentées, le bossage palpébral 12 suivant l'invention s'étend de manière symétrique de part et d'autre d'un plan diamétral passant par sa zone médiane 17.

Plus précisément, dans ces formes de réalisation, et à titre d'exemple, la bissectrice B de l'angle au centre A1 sous-tendu par le bossage palpébral 12 suivant l'invention s'étend dans le plan diamétral horizontal H de la lentille de contact 10, ce plan diamétral horizontal H étant, en pratique, le plan de stabilisation de cette lentille de contact 10.

Mais, il n'en est pas obligatoirement ainsi, le plan diamétral de symétrie d'un bossage palpébral 12 suivant l'invention, lorsque ce bossage palpébral 12 comporte un tel plan diamétral de symétrie, pouvant, au contraire, et tel que précisé ultérieurement, plus ou moins s'écarter du plan diamétral horizontal H de la lentille de contact 10.

Quoi qu'il en soit, un bossage palpébral 12 suivant l'invention comporte, de part et d'autre de sa ligne de crête L, d'une part, un flanc interne 18, qui est tourné du côté du centre C de la lentille de contact 10, et un flanc externe 19, qui est tourné du côté opposé.

Par rapport à l'axe de la lentille de contact 10, c'est-à-dire par rapport à une droite passant par le centre de celle-ci et normale au plan de son contour périphérique, le flanc interne 18 est globalement concave et le flanc externe 19 globalement convexe.

Dans la forme de réalisation plus particulièrement représentée sur les figures 3 à 5, la ligne de crête L du bossage palpébral 12 suivant l'invention comporte, dans sa zone médiane 17, un méplat 20.

Autrement dit, la hauteur maximale h de ce bossage palpébral 12, mesurée par rapport à la surface externe 11 sur laquelle celui-ci fait saillie, est, entre ses extrémités circonférentielles 15, 16, sensiblement constante, tout au long de sa zone médiane 17, en y formant le méplat 20.

Préférentiellement, dans ce cas, la hauteur maximale h du bossage palpébral 12, qui est celle du méplat 20 de sa ligne de crête L, est au plus égale à 0,2 mm.

Plus généralement, cette hauteur maximale h est au plus égale à 1,6 fois l'épaisseur e de la lentille de contact 10 appréciée à l'aplomb de la ligne de crête L, et, préférentiellement, elle est comprise entre 0,7 fois et 1,4 fois cette épaisseur e.

Préférentiellement, également, l'angle au centre A2 sous-tendu par ce méplat 20 est au moins égal au quart de celui A1 sous-tendu par l'ensemble du bossage palpébral 12, et au plus égal à la moitié de ce dernier.

Par exemple, si l'angle au centre A1 sous-tendu par l'ensemble du bossage palpébral 12 est de l'ordre de 100°, celui A2 sous-tendu par le méplat 20 de sa ligne de crête L peut être de l'ordre de 30°.

A sa base, c'est-à-dire au niveau de la surface externe 11 sur laquelle il fait saillie, un bossage palpébral 12 suivant l'invention a une largeur, qui est maximale dans le plan diamétral passant par sa zone médiane 17, c'est-à-dire, dans le plan diamétral horizontal H de la lentille de contact 10 dans les formes de réalisation représentées, et qui, tout en pouvant être relativement constante sur une portion de sa longueur de part et d'autre de ce plan diamétral, va en diminuant en direction de ses extrémités circonférentielles 15, 16.

Soit E son épaisseur maximale, c'est-à-dire son épaisseur dans le plan diamétral passant par sa zone médiane 17.

Cette épaisseur maximale E est préférentiellement comprise entre 0,25 fois et 0,46 fois le rayon R1 de la lentille de contact 10.

Par exemple, lorsque, comme représenté sur les figures 3 à 5, la ligne de crête L du bossage palpébral 12 suivant l'invention comporte un méplat 20, cette épaisseur maximale E est plus proche de 0,46 fois le rayon R1 de la lentille de contact 10 que de 0,25 fois ce rayon R1, en étant préférentiellement proche de 0,40 fois celui-ci.

Suivant le plan diamétral passant par la zone médiane 17 du bossage palpébral 12 suivant l'invention, c'est-à-dire suivant le plan diamétral horizontal H de la lentille de contact 10 dans les formes de réalisation, la pente P'1, P'2 de la ligne de plus grande pente de ce bossage palpébral 12 est comprise entre 0,07 et 0,275.

Dans la forme de réalisation plus particulièrement représentée sur les figures 3 à 5, le bossage palpébral 12 comporte, de part et d'autre de sa ligne de crête L, des flancs interne 18 et externe 19 dissymétriques.

Par exemple, et tel que représenté, le flanc interne 18 est moins raide que le flanc externe 19.

La pente P'1 de sa ligne de plus grande pente est donc inférieure à celle P'2 de la ligne de plus grande pente du flanc externe 19.

Préférentiellement, la pente P'2 de la ligne de plus grande pente de celui des flancs interne 18 et externe 19 qui est le plus raide, en l'espèce le flanc externe 19, est comprise entre 0,160 et 0,200.

Bien entendu, la pente P, qui intervient dans le sens circonférentiel, et les pentes P'1, P'2, qui interviennent dans le sens diamétral, dépendent de la hauteur maximale h du bossage palpébral 12.

La pente P dépend, en outre, d'une part, de l'angle au centre A1 sous-tendu par l'ensemble du bossage palpébral 12, et, d'autre part, de l'angle au centre A2 sous-tendu par le méplat 20 de sa ligne de crête L.

Ces pentes P'1, P'2 dépendent, elles, en sus de la hauteur maximale h du bossage palpébral 12, de l'épaisseur maximale E de celui-ci.

On donnera, ci-après, à titre d'exemple, mais sans qu'il puisse en résulter une quelconque limitation de l'invention, des valeurs numériques susceptibles de donner satisfaction, pour une lentille de contact 10 de rayon R1 égal à 7,1 mm, en supposant que le bossage palpébral 12 a une épaisseur maximale E égale à 2,66 mm et que l'angle au centre A2 sous-tendu par le méplat 20 de sa ligne de crête L est égal à 30°.

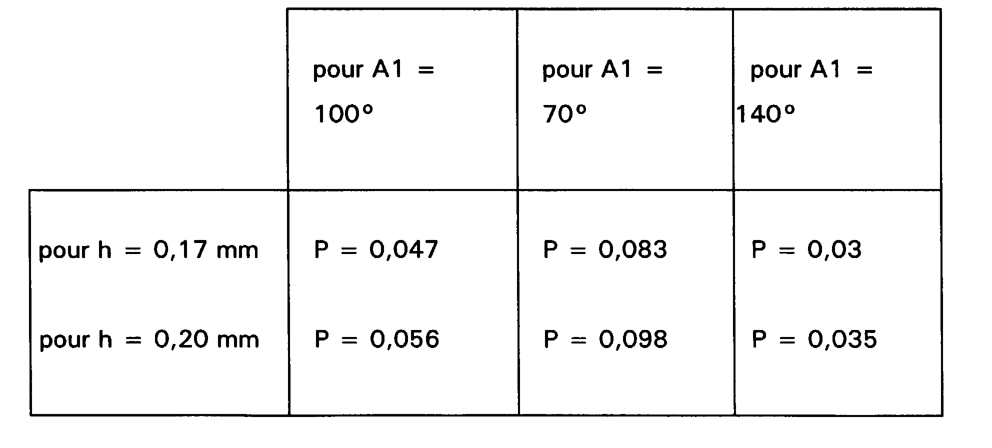

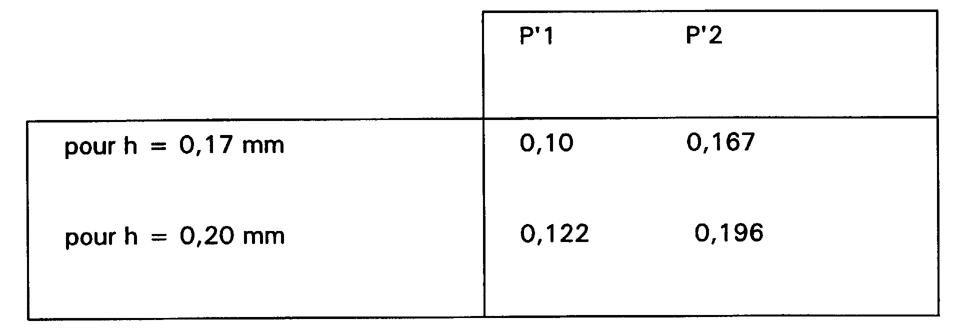

Dans la variante de réalisation représentée sur les figures 6 à 8, la ligne de crête L d'un bossage palpébral 12 suivant l'invention comporte, dans sa zone médiane 17, non plus un méplat 20, comme précédemment, mais un sommet 21.

Autrement dit, de l'une à l'autre de ses extrémités circonférentielles 15, 16, la pente P de sa ligne de crête L est d'abord croissante, puis décroissante, en chapeau de gendarme.

Préférentiellement, dans ce cas, la hauteur maximale h du bossage palpébral 12 suivant l'invention est au moins égale à 0,2 mm, et au plus égale à 0,24 mm.

Plus généralement, et comme précédemment, cette hauteur maximale h est au plus égale à 1,6 fois l'épaisseur e de la lentille de contact 10 appréciée à l'aplomb de la ligne de crête L, et, préférentiellement, elle est comprise entre 0,7 fois et 1,4 fois cette épaisseur e.

Corollairement, l'épaisseur maximale E du bossage palpébral 12 est alors plus proche de 0,25 fois le rayon R1 de la lentille de contact 10 que de 0,46 fois ce rayon R1, en étant préférentiellement proche de 0,25 fois celui-ci.

Dans la forme de réalisation représentée, le bossage palpébral 12 suivant l'invention comporte, de part et d'autre de sa ligne de crête L, des flancs interne 18 et externe 19 symétriques.

Autrement dit, les pentes P'1, P'2 des lignes de plus grande pente de ces flancs interne 18 et externe 19 sont sensiblement identiques l'une à l'autre.

On donnera, ci-après, à titre d'exemple, et dans les mêmes conditions que ci-dessus, des valeurs numériques susceptibles de donner satisfaction pour un tel bossage palpébral 12, étant supposé que son épaisseur maximale E est sensiblement égale à 2,04 mm.

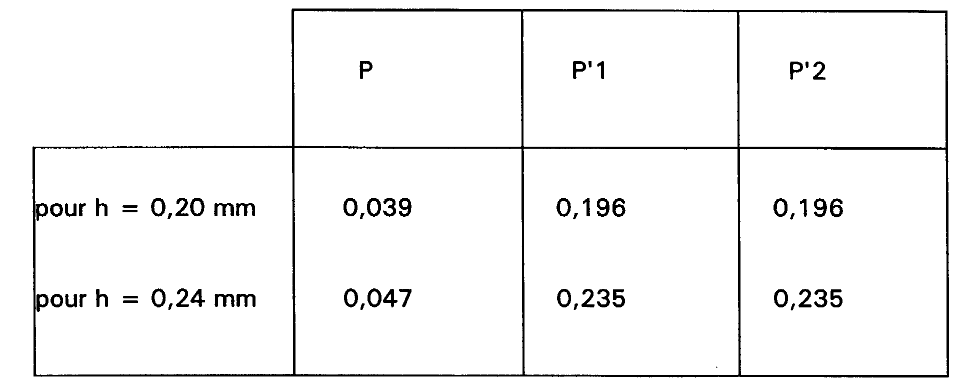

Bien entendu, la présente invention ne se limite pas aux formes de réalisation décrites et représentées, mais englobe toute variante d'exécution et/ou de combinaison de leurs divers éléments.

En particulier, et comme déjà précédemment indiqué, un bossage palpébral suivant l'invention peut être plus ou moins désaxé par rapport à l'horizontale.

Autrement dit, la bissectrice de l'angle au centre qu'il sous-tend peut s'écarter plus ou moins du plan diamétral horizontal de la lentille de contact, en s'étendant par exemple entre 35° au-dessus de ce plan diamétral horizontal et 60° en dessous de celui-ci.

De même, un bossage palpébral suivant l'invention n'est pas nécessairement symétrique par rapport au plan diamétral de la lentille de contact passant par sa zone médiane, c'est-à-dire par rapport au plan diamétral de cette lentille de contact passant par la bissectrice de l'angle au centre qu'il sous-tend.

Au contraire, sa ligne de crête peut par exemple avoir des pentes différentes l'une de l'autre à ses extrémités circonférentielles.

## Revendications

1. Lentille de contact du genre comportant, localement, en saillie sur sa surface externe (11), dans sa zone périphérique (13), pour sa stabilisation dynamique, au moins un bossage palpébral (12), caractérisée en ce que ce bossage palpébral (12) est globalement allongé circonférentiellement, et en ce que, à l'une et l'autre de ses extrémités circonférentielles (15, 16), la pente (P) de sa ligne de crête (L) est comprise entre 0,020 et 0,140, et, préférentiellement, entre 0,040 et 0,080.

2. Lentille de contact suivant la revendication 1, caractérisée en ce que, dans sa zone médiane (17), la ligne de crête (L) du bossage palpébral (12) comporte un méplat (20).

3. Lentille de contact suivant la revendication 2, caractérisée en ce que l'angle au centre (A2) sous-tendu par le méplat (20) de la ligne de crête (L) du bossage palpébral (12) est au moins égal au quart de celui (A1) sous-tendu par l'ensemble de ce bossage palpébral (12).

4. Lentille de contact suivant la revendication 3, caractérisée en ce que l'angle au centre (A2) sous-tendu par le méplat (20) de la ligne de crête (L) du bossage palpébral (12) est au plus égal à la moitié de celui (A1) sous-tendu par l'ensemble de ce bossage palpébral (12).

5. Lentille de contact suivant la revendication 1, caractérisée en ce que, dans sa zone médiane (17), la ligne de crête (L) du bossage palpébral (12) comporte un sommet (21).

6. Lentille de contact suivant l'une quelconque des revendications 1 à 4, caractérisée en ce que la hauteur maximale (h) du bossage palpébral (12) est au plus égale à 1,6 fois l'épaisseur (e) de la lentille de contact (10) appréciée à l'aplomb de la ligne de crête (L), et, préférentiellement, elle est comprise entre 0,7 fois et 1,4 fois cette épaisseur (e).

7. Lentille de contact suivant les revendications 2 et 6, prises conjointement, caractérisée en ce que la hauteur maximale (h) du bossage palpébral (12) est au plus égale à 0,2 mm.

8. Lentille de contact suivant les revendications 5 et 6, prises conjointement, caractérisée en ce que la hauteur maximale (h) du bossage palpébral (12) est au moins égale à 0,2 mm.

9. Lentille de contact suivant la revendication 8, caractérisée en ce que la hauteur maximale (h) du bossage palpébral (12) est au plus égale à 0,24 mm.

10. Lentille de contact suivant l'une quelconque des revendications 1 à 9, caractérisée en ce que la ligne de crête (L) du bossage palpébral (12) s'étend suivant un arc de cercle.

11. Lentille de contact suivant la revendication 10, caractérisée en ce que le rayon (R2) de l'arc de cercle suivant lequel s'étend la ligne de crête (L) du bossage palpébral (12) est compris entre 0,7 fois et 0,9 fois le rayon (R1) de la lentille de contact.

12. Lentille de contact suivant l'une quelconque des revendications 10, 11, caractérisée en ce que le bossage palpébral (12) est lui-même globalement cintré en arc de cercle.

13. Lentille de contact suivant l'une quelconque des revendications 1 à 12, caractérisée en ce que l'angle au centre (A1) sous-tendu par l'ensemble du bossage palpébral (12) est compris entre 60° et 150°.

14. Lentille de contact suivant l'une quelconque des revendications 1 à 13, caractérisée en ce que, suivant le plan diamétral passant par sa zone médiane (17), la pente (P'1, P'2) de la ligne de plus grande pente du bossage palpébral (12) est comprise entre 0,07 et 0,275.

15. Lentille de contact suivant l'une quelconque des revendications 1 à 14, caractérisée en ce que, de part et d'autre de sa ligne de crête (L), le bossage palpébral (12) comporte des flancs interne (18) et externe (19) dissymétriques.

16. Lentille de contact suivant les revendications 14 et 15, prises conjointement, caractérisée en ce que la pente (P'2) de la ligne de plus grande pente de celui des flancs interne (18) et externe (19) qui est le plus raide est comprise entre 0,160 et 0,200.

17. Lentille de contact suivant l'une quelconque des revendications 15, 16, caractérisée en ce que le flanc interne (18) du bossage palpébral (12) est moins raide que son flanc externe (19).

18. Lentille de contact suivant l'une quelconque des revendications 1 à 14, caractérisée en ce que, de part et d'autre de sa ligne de crête (L), le bossage palpébral comporte des flancs interne (18) et externe (19) symétriques.

19. Lentille de contact suivant l'une quelconque des revendications 1 à 18, caractérisée en ce que, à sa base, le bossage palpébral (12) a une épaisseur maximale (E) comprise entre 0,25 fois et 0,46 fois le rayon (R1) de la lentille de contact.

20. Lentille de contact suivant l'une quelconque des revendications 1 à 19, caractérisée en ce qu'elle comporte deux bossages palpébraux (12) disposés, chacun respectivement, de manière symétrique, de part et d'autre de son plan diamétral vertical (V).
